# EUROPÄISCHE PATENTSCHRIFT

(11) **EP 0 312 879 B1**
(45) Veröffentlichungstag und Bekanntmachung des Hinweises auf die Patenterteilung: **07.01.1993**
(21) Anmeldenummer: 88116813.2
(22) Anmeldetag: 11.10.1988
(51) Int. Cl.: C03C 17/25

(54) **Flüssige Zubereitung zur Herstellung elektrisch leitfähiger und infrarot reflektierender fluordotierter Zinnoxidschichten auf Glas- oder Glaskeramikoberflächen**
Liquid preparation for producing electrically conducting and infrared reflecting, fluorine-doped tin oxide layers on glass or glass-ceramic surfaces
Préparation liquide pour fabriquer des couches d'oxyde d'étain électriquement conductrices et réfléchissant les infrarouges, dopées au fluor, sur des surfaces vitreuses ou vitrocéramiques

(30) Priorität: 21.10.1987 DE 3735627
(43) Veröffentlichungstag der Anmeldung: 26.04.1989
(73) Patentinhaber: Th. Goldschmidt AG, 45127 Essen (DE)
(72) Erfinder: Ruf, Erich, Dr., D-4300 Essen (DE)

(56) Entgegenhaltungen:
- US-A- 2 566 346
- CHEMICAL ABSTRACTS, Band 103, Nr. 12, September 1985, Seite 262, Zusammenfassung Nr. 91946x, Columbus, Ohio, US; & JP-A-60 81 046 (MATSUSHITA ELECTRIC INDUSTRIAL CO., LTD) 09-05-1985

## Beschreibung

Die Erfindung betrifft eine flüssige Zubereitung zur Herstellung von elektrisch leitfähigen und infrarot reflektierenden fluordotierten Zinnoxidschichten auf Glas- oder Glaskeramikoberflächen mit einem Gehalt an gegebenenfalls organische Gruppen aufweisenden Zinn-IV-chloriden.

Es ist bekannt, daß fluordotierte Zinnoxidschichten auf Glasoberflächen den elektrischen Widerstand der vergüteten Oberflächen herabsetzen und die Infrarotreflexion erhöhen. Zur Herstellung dieser Zinnoxidoberflächenschichten bringt man eine geeignete Zinnverbindung gleichzeitig mit einer Fluor abgebenden Verbindung in Kontakt mit der auf Temperaturen von 400 bis 800°C erhitzten Oberfläche. Die Zinnverbindung (Basisverbindung) bildet auf der Oberfläche des Glases oder der Glaskeramik eine zusammenhängende Schicht aus Zinnoxid. Die Fluor abgebende Verbindung (Dotierungsmittel) bewirkt eine Dotierung der entstehenden oder erhaltenen Zinnoxidschicht mit Fluor. Diese Dotierung ist für die Ausbildung der gewünschten Eigenschaften wie Leitfähigkeit und Infrarotreflexion von entscheidender Bedeutung.

Das Verfahren zur Herstellung dieser fluordotierten Zinnoxidschichten auf geeigneten Oberflächen kann in verschiedener Weise durchgeführt werden. Man kann die zinn- und fluorenthaltenden Verbindungen aus der Gasphase auf die zu vergütende Oberfläche einwirken lassen oder die Oberfläche mit einem Gasstrom, der die Verbindungen in Form eines feinen Pulvers enthält, beaufschlagen. Verfahrenstechnisch ist das Aufsprühen von Lösungen dieser Verbindungen in einem geeigneten Lösungsmittel besonders einfach durchzuführen.

Zu diesem Stand der Technik gibt es eine umfangreiche Patentliteratur, aus der stellvertretend die folgenden Offenlegungs- oder Patentschriften genannt werden sollen:
Aus der DE-PS 30 10 077 ist ein Verfahren zum Aufbringen einer Infrarotstrahlen reflektierenden Schicht aus einem mit einem Halogen, vorzugsweise mit Fluor, dotiertem Zinnoxid durch Pyrolyse auf eine Glasoberfläche, bei dem auf die eine Temperatur von 400 bis 650°C aufweisende Glasoberfläche eine organische Zinnverbindung (Basisverbindung) in Pulverform mit einer Teilchengröße von weniger als 20 µm als Suspension in einem gasförmigen Trägerstrom in Gegenwart einer Halogenverbindung (Dotierungsmittel) aufgebracht wird, wobei als Halogenverbindung (Dotierungsmittel) eine pulverförmige Verbindung verwendet wird, die in dem gasförmigen Trägerstrom für die Zinnverbindung (Basisverbindung) suspendiert ist. Beispiel einer Basisverbindung ist Dibutylzinnoxid, während als Dotierungsmittel Dibutylzinndifluorid genannt wird. Basisverbindung und Dotierungsmittel können auch in einer einzigen Verbindung wie z.B. Ammoniumdibutylzinntetrafluorid verwirklicht sein. Es hat sich jedoch gezeigt, daß die reproduzierbare Ausbildung eines gleichmäßigen Stromes von Trägergas und pulverförmigen Verbindungen nur schwierig zu gewährleisten ist, so daß Oberflächenschichten mit stets wechselnden Eigenschaften erhalten werden.

Aus der DE-PS 28 06 468 ist ein Verfahren bekannt, bei dem als Basisverbindung Dibutylzinnoxid in Form eines Pulvers in einem wasserfreien Luftstrom dispergiert verwendet wird, während das Dotierungsmittel eine gasförmige Fluorverbindung ist, die der Dispersion kurz vor Erreichen der Austrittsdüse zugemischt wird. Als gasförmige Fluorverbindungen werden wasserfreier Fluorwasserstoff, BF₂, BrF₅, ClF₃, SiF₄, WF₆ und MoF₆ genannt. Bei diesen gasförmigen Fluorverbindungen besteht die Gefahr der Verätzung der Oberfläche des zu vergütenden Glases oder der Glaskeramik. Außerdem sind bei Verwendung dieser chemisch aggressiven und toxischen Gase umfangreiche Sicherheitsvorkehrungen zu treffen.

Das Aufbringen geeigneter Zinnverbindungen und Dotierungsmittel aus der Gasphase kann der EU-OS 0 112 780 entnommen werden. Bei diesem Verfahren wird eine gasförmige Mischung von Butylzinntrichlorid (Basisverbindung) und Dichlordifluormethan (Dotierungsmittel) verwendet. Auch hier treten Dosierungsprobleme, die zu Oberflächen ungleicher und unzureichender Eigenschaften führen, auf. Außerdem ist die Verwendung von Dichlordifluormethan aus Umweltgründen unerwünscht.

In der US-PS 4 293 594 ist ein Verfahren offenbart, bei dem man eine gasförmige Mischung von Dimethylzinndichlorid und Dimethylzinndifluorid in einem Trägergas auf die zu vergütenden Oberflächen aufbringt. Diese Verbindungen sind jedoch fest und lassen sich nur bei hohen Temperaturen in die Gasphase überführen.

Eine flüssige Zubereitung zur Herstellung hochwertiger, fluordotierter Zinnoxidschichten auf Glasoberflächen kann der EU-OS 0 158 399 entnommen werden. Die Zubereitung besteht aus
- a) 1 bis 30 Gew.-%: eines Dotierungsmittels auf der Basis einer organischen Fluorverbindung, ausgewählt aus Trifluoressigsäure oder deren Anhydrid, Trifluoressigsäureethylester, Trifluorethanol und Pentafluorpropionsäure, und
- b) 70 bis 99 Gew.-%: einer Organozinnverbindung, ausgewählt aus Alkylzinntrichlorid, Dialkylzinndichlorid, Alkyldichlorzinnacetat, Alkylchlorzinndiacetat, einem Ester des Zinnchlorids oder Zinntetrachlorid.

Auch dieses Verfahren kann noch nicht befriedigen, da die fluorhaltigen Dotierungsmittel in der Mehrzahl niedrig siedende Flüssigkeiten darstellen und daher an der heißen Glasoberfläche größtenteils verdampfen und deshalb nicht in die Zinnoxidschicht eingebaut werden. Bedngt durch die Verdampfungswärme dieser Dotierungsmittel wird die heiße Substratoberfläche relativ stark abgekühlt, was zu einer Verschlechterung der Eigenschaften der aufgebrachten Schicht führt.

Im Falle der Pentafluorpropionsäure erfolgt die Zersetzung an der heißen Glasoberfläche nicht schnell genug, so daß auch hier die Zinnoxidschicht ungenügende Funktionswerte aufweist. Hinzu kommt, daß diese Verbindungen sehr teuer und gesundheitsgefährdend sind.

Der vorliegenden Erfindung liegt die Aufgabe zugrunde, Lösungen von Zinnverbindungen als Basisverbindungen und fluorenthaltenden Dotierungsmitteln zu finden, welche verfahrenstechnisch einfach zu handhaben sind, möglichst keine aggressiven oder toxischen Verbindungen enthalten, deren Bestandteile leicht zugängliche und möglichst billige Chemikalien sind und die dennoch hochwertige Oberflächenschichten auf Glas oder Glaskeramik zu erzeugen gestatten.

Diese Eigenschaften konnten überraschenderweise bei einer Zubereitung gefunden werden, welche gegebenenfalls organische Gruppen aufweisende Zinn-IV-chloride als Basisverbindungen und erfindungsgemäß als einziges Dotierungsmittel Zinn-II-fluoroborat (Sn[BF₄]7₂) enthält.

Dies war insbesondere deshalb überraschend, da aus der US-PS 2 566 346 bekannt ist, daß bei Einsatz von Lösungen, die anorganische und/oder organische Zinn-IV-chloride als Basisverbindungen und Antimonfluoride als Dotierungsmittel enthalten, im Sprühzerstäubungsverfahren auf die Oberfläche von Gläsern aufgebracht, Zinnoxidschichten entstehen, die keine nennenswerten Infrarotreflexions- bzw. keine guten Flächenwiderstandswerte aufweisen.

Hinzu kommt ferner, daß wäßrige bzw. wäßrig-alkoholische Zinnfluoroboratlösungen allein, also ohne zusätzliche Anwesenheit der gegebenenfalls organische Gruppen aufweisenden Zinn-IV-chloride, sich an der heißen Glasoberfläche schlecht zersetzen, wobei sich auf der Substratoberfläche störende Zersetzungsrückstände aufbauen und deshalb keine brauchbaren Funktionsschichten erhalten werden.

Es ist dabei besonders vorteilhaft, daß die Lösungen frei von Flußsäure, Fluoroboratsäure und sauren Fluoridverbindungen sind und damit weder Materialien angreifen oder beschädigen noch Gesundheitsgefährdungen verursachen.

Ein weiterer Vorteil der erfindungsgemäßen Zubereitungen ist darin zu sehen, daß dank des Boranteiles die damit beschichteten Glasoberflächen chemisch beständiger werden.

Bevorzugtes Beispiel einer erfindungsgemäßen Zubereitung ist eine Lösung, die aus
- 30 bis 89,5 Gew.-%: gegebenenfalls organische Gruppen aufweisenden Zinn-IV-chloriden,
- 0,5 bis 7,5 Gew.-%: Zinn-II-fluoroborat in Form einer wäßrigen 30 bis 60 gew.-%igen Lösung und
- 10 bis 62,5 Gew.-%: eines polaren organischen Lösungsmittels
besteht.

Geeignete Basisverbindungen sind neben Zinntetrachlorid Alkylzinntrichlorid, Dialkylzinndichlorid, Dialkylchlorzinnacetat, Alkylchlorzinndiacetat, wobei der Alkylrest jeweils ein Rest mit 1 bis 6, insbesondere 4 Kohlenstoffatomen und bevorzugt der n-Butylrest ist.

Besonders bevorzugt ist deshalb eine erfindungsgemäße Zubereitung, welche aus
- 30 bis 89,5 Gew.-%: Zinntetrachlorid oder Alkylzinntrichlorid,
- 0,5 bis 7,5 Gew.-%: Zinn-II-fluoroborat in Form einer wäßrigen 30 bis 60 gew.-%igen Lösung und
- 10 bis 62,5 Gew.-%: eines polaren organischen Lösungsmittels
besteht.

Insbesondere bevorzugt ist eine Zubereitung der Zusammensetzung
- 30 bis 89,5 Gew.-%: Zinntetrachlorid oder Butylzinntrichlorid,
- 0,5 bis 6 Gew.-%: Zinn-II-fluoroborat in Form einer wäßrigen 30 bis 60 gew.-%igen Lösung und
- 10 bis 64 Gew.-%: Ethanol und/oder Essigsäureethylester.

Als polare organische Lösungsmittel kommen niedere aliphatische Alkohole, insbesondere Ethanol und niedrig siedende Ester, insbesondere Essigsäureethylester oder Ketone wie Methylisobutylketon in Frage.

Die erfindungsgemäße Zubereitung wird zweckmäßig mit einer Sprühpistole im Sprühzerstäubungsverfahren unter Verwendung von Preßluft auf das erhitzte Substrat, insbesondere Glas, aufgetragen. Das Substrat soll dabei eine Temperatur von 400 bis 800°C haben. Die Temperatur des Substrates muß jedoch unterhalb seiner jeweiligen Schmelz- bzw. Erweichungstemperatur liegen.

Durch Pyrolyse wird auf der Substratoberfläche ein mit Fluor dotierter Zinnoxidfilm erzeugt. Dieser Film hat die Eigenschaften einer Halbleiterschicht. Je nach angewendeten Mengen der erfindungsgemäßen Zubereitung wird ein Film mit einer Schichtdicke von 100 bis 1000 nm erhalten. Entsprechend dem erfindungsgemäßen Verfahren sind daher auf Glas selektive Transparentbeschichtungen herstellbar, die für das sichtbare Licht weitgehend (75 bis 83 %) durchlässig sind, während Infrarotstrahlen oberhalb ca. 2500 nm Wellenlänge je nach Schichtdicke zu 80 bis 90 % reflektiert werden.

Die nachfolgenden Beispiele dienen der weiteren Erläuterung der Erfindung.

### Beispiel 1

In eine 100-ml-Glasflasche, die mit Magnetrührer versehen ist, werden

| | |
|---|---|
| 29,0 g | Ethylalkohol, |
| 70,0 g | Butylzinntrichlorid und |
| 1,0 g | einer ca. 50 gew.-%igen wäßrigen Zinn-II-fluoroboratlösung |

gegeben und unter Rühren und Kühlen gemischt.

5 ml dieser Lösung werden in den Becher einer Sprühpistole (Düsendurchmesser 1 mm; Sprühdruck 4 bar) gefüllt und auf eine Flachglasscheibe (160 x 180 x 6 mm), die zuvor in einem Ofen 5 Minuten lang bei 700°C Ofentemperatur aufgeheizt worden war, versprüht. Nach dem Erkalten weist die Glasscheibe folgende Werte auf:

| | |
|---|---|
| Schichtdicke: | 400 nm |
| Infrarotreflexion: | 84,0 % |
| Flächenwiderstand: | 19 Ohm/Quadrat |

### Beispiel 2

In eine 100-ml-Glasflasche, die mit Magnetrührer versehen ist, werden

| | |
|---|---|
| 52,0 g | Ethanol, |
| 46,1 g | SnCl₄ und |
| 1,9 g | einer ca. 50 gew.-% igen wäßrigen Zinn-II-fluoroboratlösung |

gegeben und unter Rühren und Kühlen 2 Stunden gemischt.

5 ml dieser Lösung werden zur Vergütung einer Glasoberfläche entsprechend Beispiel 1 verwendet. Nach dem Erkalten weist die Glasscheibe folgende Werte auf:

| | |
|---|---|
| Schichtdicke: | 350 nm |
| Infrarotreflexion: | 80,0 % |
| Flächenwiderstand: | 28 Ohm/Quadrat |

## Patentansprüche

1. Flüssige Zubereitung zur Herstellung von elektrisch leitfähigen und infrarot reflektierenden fluordotierten Zinnoxidschichten auf Glas- oder Glaskeramikoberflächen mit einem Gehalt an Zinn-IV-chloriden, welche organische Gruppen aufweisen können, dadurch gekennzeichnet, daß sie aus
30 bis 89,5 Gew.-% Zinntetrachlorid oder Alkylzinntrichlorid,
0,5 bis 7,5 Gew.-% Zinn-II-fluoroborat in Form einer wäßrigen 30 bis 60 gew.-%igen Lösung und
10 bis 62,5 Gew.-% eines polaren organischen Lösungsmittels
besteht.

2. Zubereitung nach Anspruch 1, dadurch gekennzeichnet, daß sie aus
30 bis 89,5 Gew.-% Zinntetrachlorid oder Butylzinntrichlorid,
0,5 bis 6,0 Gew.-% Zinn-II-fluoroborat in Form einer wäßrigen 30 bis 60 gew.-%igen Lösung und
10 bis 64 Gew.-% Ethanol und/oder Essigsäureethylester
besteht.

## Claims

1. Liquid composition for the production of electro-conductive, infrared-reflective, fluorine-doped tin oxide layers on glass or glass-ceramic surfaces, which contains tin(IV) chlorides which may contain organic groups, characterised in that it comprises
from 30 to 89.5 % by weight of tin tetrachloride or an alkyltin trichloride,
from 0.5 to 7.5 % by weight of tin(II) fluoroborate in the form of an aqueous, from 30 to 60 % strength by weight solution, and
from 10 to 62.5 % by weight of a polar organic solvent.

2. Composition according to Claim 1, characterised in that it comprises
from 30 to 89.5 % by weight of tin tetrachloride or butyltin trichloride,
from 0.5 to 6.0 % by weight of tin(II) fluoroborate in the form of an aqueous, from 30 to 60 % strength by weight solution, and
from 10 to 64 % by weight of ethanol and/or ethyl acetate.

## Revendications

1. Préparation liquide pour la fabrication de couches d'oxyde d'étain dopées au fluor, électroconductrices et réfléchissant les infrarouges, sur des surfaces de verre ou de vitrocéramique, contenant des chlorures d'étain-IV qui peuvent contenir des groupes organiques, caractérisée en ce qu elle est composée de :
30 à 89,5 % en poids de tétrachlorure d'étain ou de trichlorure d'alcoylétain, et
0,5 à 7,5 % en poids de fluoroborate d'étain-II sous la forme d'une solution aqueuse à 30 à 60 % en poids, et
10 à 62,5 % en poids d'un solvant organique polaire.

2. Préparation selon la revendication 1, caractérisée en ce qu'elle est composée de :
30 à 89,5 % en poids de tétrachlorure d'étain ou de trichlorure de butylétain, et
0,5 à 6,0 % en poids de fluoroborate d'étain-II sous la forme d'une solution aqueuse à 30 à 60 % en poids, et
10 à 64,0 % en poids d'éthanol et/ou d'ester éthylique de l'acide acétique.
